# FASCICULE DE BREVET EUROPEEN

(11) **EP 2 039 906 B1**
(45) Date de publication et mention de la délivrance du brevet: **30.03.2011**
(21) Numéro de dépôt: 08163458.6
(22) Date de dépôt: 02.09.2008
(51) Int. Cl.: F02B 29/04

(54) **Procédé de régulation de la température d'un moteur thermique à turbocompresseur et refroidisseur d'air de suralimentation**
Verfahren zur Temperaturregelung eines Verbrennungsmotors mit Turbolader und Ladeluftkühler
Method of controlling the temperature of an internal combustion engine with turbo charger and intercooler

(30) Priorité: 19.09.2007 FR 0757661
(43) Date de publication de la demande: 25.03.2009
(73) Titulaire: PEUGEOT CITROËN AUTOMOBILES SA, 78140 Vélizy Villacoublay (FR)
(72) Inventeur: Chevalier, Philippe, 92340 Bourg La Reine (FR)
(74) Mandataire: Ménès, Catherine

(56) Documents cités:
- EP-A- 0 054 792
- DE-A1- 4 222 088
- US-A- 5 353 757
- US-B2- 7 168 398

## Description

L'invention se rapporte au domaine des moteurs thermiques à turbocompresseur ou ceux de technologie hybride comprenant un moteur thermique à turbocompresseur.

Plus particulièrement, l'invention se rapporte à la régulation de la température de divers éléments d'un moteur thermique ou de divers composants amenés à ce moteur thermique afin d'optimiser le fonctionnement de celui-ci.

Cette régulation concerne principalement, d'une part, la température de l'air envoyé à l'admission du moteur et, d'autre part, la température de l'eau et de l'huile du moteur thermique pour obtenir une montée rapide de température de ces deux éléments peu après le démarrage de ce moteur thermique.

Il est connu d'équiper un moteur thermique et notamment un moteur Diesel d'un turbocompresseur pour l'amélioration des performances de ce moteur.

On sait qu'un tel turbocompresseur, entraîné par les gaz d'échappement du moteur, produit de l'air sous pression, appelé air de suralimentation ou air d'admission, qui est envoyé à l'admission du moteur. Cet air de suralimentation se trouve porté, du fait de sa compression, à une température élevée et il convient de le refroidir préalablement à son admission au moteur, pour que celui-ci puisse fonctionner dans des conditions optimales. Ceci est fait par un refroidisseur d'air de suralimentation, appelé aussi en abrégé RAS, placé à la sortie du turbocompresseur afin d'abaisser la température de l'air de suralimentation, ce qui permet principalement d'augmenter la masse volumique de l'air et de fournir plus d'air au moteur dans un même volume. Le RAS refroidit l'air de suralimentation par échange thermique gaz/liquide avec un liquide de refroidissement, par exemple de l'eau. Ce liquide de refroidissement provient souvent du système de liquide de refroidissement du moteur.

En ce qui concerne le premier aspect de régulation de la température des composants amenés au moteur, lorsque le liquide de refroidissement du moteur devient trop chaud, celui-ci ne permet plus d'assurer le refroidissement de l'air de suralimentation de manière suffisante. Ceci a lieu quand le moteur thermique est chaud et que le liquide de refroidissement, bien que refroidi par le radiateur du circuit de liquide de refroidissement moteur, n'a pas été abaissé à une température assez basse pour pouvoir refroidir cet air de suralimentation. Il peut se produire alors une augmentation des émissions polluantes, par exemple des oxydes d'azote. Il conviendrait d'envisager un refroidissement plus efficace de l'air de suralimentation que celui effectué par le liquide de refroidissement du moteur, quand celui-ci est en pleine charge.

En ce qui concerne le second aspect de régulation de la température des éléments du moteur thermique, un véhicule thermique traditionnel et encore plus un véhicule de technologie hybride a besoin d'une montée en température efficace et rapide du liquide de refroidissement conjointement avec l'huile moteur afin de réduire sa consommation. La montée en température du liquide de refroidissement et de l'huile d'un moteur thermique est assurée par la dissipation des calories issues de la combustion par conduction au travers de la matière de la culasse et du carter cylindre. Lors de sa montée en température, le thermostat du circuit de refroidissement du moteur est fermé et donc le radiateur en façade de ce circuit n'est pas en fonctionnement. Le liquide de refroidissement et l'huile montent ainsi parallèlement en température. On évite ainsi, entre autres, l'émission de polluants, comme l'acide carbonique et le monoxyde de carbone et la consommation de carburant est diminuée.

Afin d'améliorer la montée en température moteur, des processus de régulation thermique plus ou moins complexes peuvent être envisagées. On pourra citer, entre autres, la coupure du débit moteur par une pompe électrique, la circulation coupée dans des parties du moteur, dit en anglais « split cooling » ou refroidissement partiel, ou enfin la gestion des débits dans les branches du circuit de refroidissement moteur par une vanne. Ces solutions n'ont jusqu'ici donné qu'une satisfaction partielle.

Le document FR-A-2 835 884 décrit un procédé de contrôle de la température des gaz admis dans un moteur à combustion interne, notamment de véhicule automobile, dans lequel on fait circuler les gaz dans un échangeur liquide/gaz préalablement à leur admission dans le moteur thermique à combustion interne et dans lequel on fait circuler soit un liquide à haute température soit un liquide à basse température soit les deux liquides mélangés ou pas, dans l'échangeur liquide/gaz afin de réchauffer et/ou de refroidir les gaz en fonction des besoins. Ce document concerne aussi un échangeur liquide/gaz pour la mise en oeuvre du procédé et un dispositif de gestion de la température des gaz admis dans un moteur thermique. Cet échangeur liquide/gaz est, de préférence, un refroidisseur d'air de suralimentation refroidi, d'une part, par le liquide de refroidissement du moteur sortant directement de celui-ci, généralement de l'eau, ce liquide formant le liquide à haute température et, d'autre part, par ce liquide de refroidissement du moteur refroidi par un radiateur auxiliaire, ce liquide formant le liquide à basse température.

Plusieurs remarques sont à considérer au sujet de la divulgation de ce document. Premièrement, ce document n'est pas concerné par le réchauffement forcé du liquide de refroidissement du moteur en tout début de la marche de celui-ci, ce problème n'étant jamais évoqué dans ce document. L'homme de métier n'a donc aucune raison d'aller chercher une solution à ce problème dans l'enseignement donné par ce document.

Secondement, dans tous les modes de réalisation décrits dans ce document, le liquide de refroidissement à basse température provient d'un piquage sur le circuit de liquide haute température, des vannes insérées dans les divers circuits permettant de sélectionner quel fluide va être conduit au refroidisseur d'air de suralimentation quand celui-ci est à un étage ou quels fluides vont être dirigés vers les étages respectifs du RAS. Il s'ensuit que le fluide basse température, bien que refroidi par son radiateur spécifique n'est pas complètement indépendant du fluide haute température et peut, par exemple, présenter une température n'étant pas assez basse pour garantir un refroidissement suffisant du RAS.

Le problème à la base de la présente invention est donc de réguler, d'une part, les températures du liquide de refroidissement et de l'huile d'un moteur thermique à turbocompresseur dans la phase de montée en température de ce moteur afin d'augmenter la montée en température de ceux-ci et, d'autre part, la température de l'air de suralimentation amené à ce moteur dans les conditions d'un moteur thermique chaud, afin de garantir un meilleur refroidissement de cet air.

A cet effet, l'invention a pour objet un procédé de régulation de la température d'éléments d'un moteur thermique à turbocompresseur et/ou de composants amenés à ce moteur thermique, ce moteur étant alimenté en gaz d'admission sortant d'un turbocompresseur et passant dans un refroidisseur d'air de suralimentation avant son entrée dans le plénum d'admission du moteur, ce refroidisseur comprenant un échangeur de chaleur gaz/liquide couplé avec le système de liquide de refroidissement du moteur, caractérisé en ce que, lors de la phase de montée en température du moteur thermique, ce procédé comprend l'étape de chauffage du liquide de refroidissement du moteur par ce refroidisseur d'air de suralimentation afin que ce liquide soit porté, ainsi que l'huile du moteur, plus vite à la température de fonctionnement normal du moteur.

Pour la présente invention, le terme « turbocompresseur » est général, et concerne, soit un compresseur seul, soit une turbine seule, soit l'association d'un turbo avec un compresseur.

Le procédé de régulation peut aussi comprendre, lors de la phase où le moteur thermique est chaud ainsi que son liquide de refroidissement, une étape de refroidissement du refroidisseur d'air de suralimentation par un fluide basse température circulant dans une boucle indépendante du système de liquide de refroidissement du moteur.

Le procédé de régulation peut de même comprendre, lors de la phase où la température du moteur thermique doit être maintenue suffisamment haute, par exemple lors de la régénération du filtre à particules, et dans le cas où la température du fluide de refroidissement du moteur est suffisamment haute, une étape de maintien de l'amenée du fluide de refroidissement du moteur au refroidisseur d'air de suralimentation, afin que l'air de suralimentation amené au moteur soit gardé à une température haute.

L'invention a aussi pour objet un refroidisseur d'air de suralimentation pour un moteur thermique comprenant un turbocompresseur, ce refroidisseur présentant sur une boucle de refroidissement avec le fluide de refroidissement du moteur thermique, dite boucle de fluide haute température, et une boucle de refroidissement auxiliaire, dite boucle de fluide basse température, une vanne pouvant alimenter le refroidisseur d'air en fluide haute température ou en fluide basse température, caractérisé en ce que la boucle de fluide basse température est indépendante de la boucle de fluide haute température et que la vanne est intégrée dans le refroidisseur d'air de suralimentation.

Selon des caractéristiques additionnelles du refroidisseur d'air de suralimentation :
- la boucle de fluide basse température comprend sa pompe et son radiateur propres,
- la vanne intégrée est une vanne électrique, pneumatique ou thermostatique,
- le liquide de refroidissement haute température est principalement de l'eau, le cas échéant avec des adjuvants,
- la vanne peut être commandée par une unité de commande comprenant notamment un capteur mesurant la température de l'air de suralimentation au moteur, et des capteurs dans les boucles de refroidissement haute et basse température pour la sélection de la boucle assurant le refroidissement du refroidisseur d'air de suralimentation, cette unité de commande pouvant permettre aussi le maintien du refroidissement haute température lors de la phase où la température du moteur thermique doit être maintenue suffisamment haute, par exemple pour la régénération du filtre à particules.

L'invention concerne également un système de refroidissement d'un moteur thermique à turbocompresseur caractérisé en ce qu'il comprend une boucle de refroidissement avec un tel refroidisseur d'air de suralimentation.

L'invention concerne aussi un véhicule automobile à moteur thermique à turbocompresseur ou à motorisation hybride caractérisé en ce qu'il comprend un tel refroidisseur d'air de suralimentation ou un tel système de refroidissement d'un moteur thermique.

Avantageusement, le véhicule présente le refroidisseur d'air de suralimentation disposé sur une boucle de refroidissement du moteur thermique comprenant aussi l'aérotherme du véhicule.

L'invention va maintenant être décrite plus en détail mais de façon non limitative en regard des figures annexées, dans lesquelles :

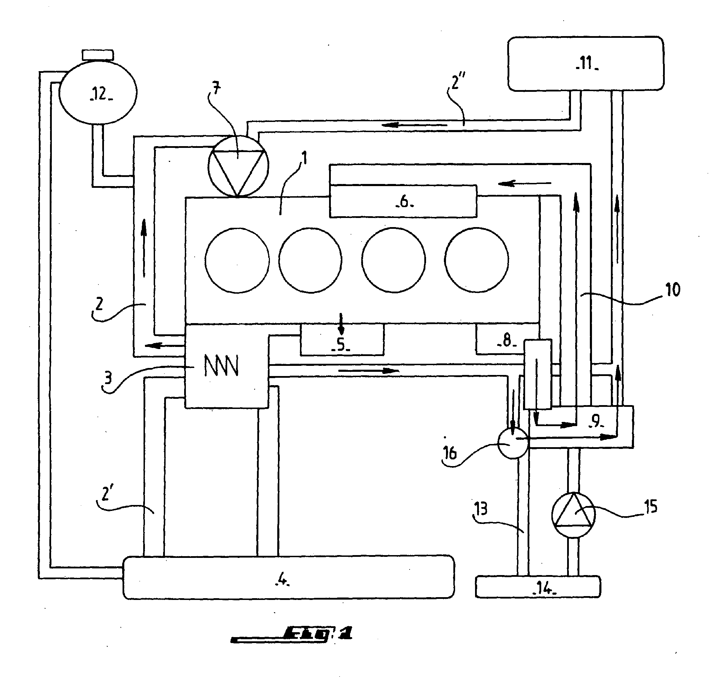

- la figure 1 est une représentation schématique d'un schéma d'utilisation d'un refroidisseur d'air de suralimentation dans le cas de figure où le moteur est en phase de montée en température et où le refroidissement de l'air de suralimentation est effectué par le liquide de refroidissement du moteur, conformément à l'invention,

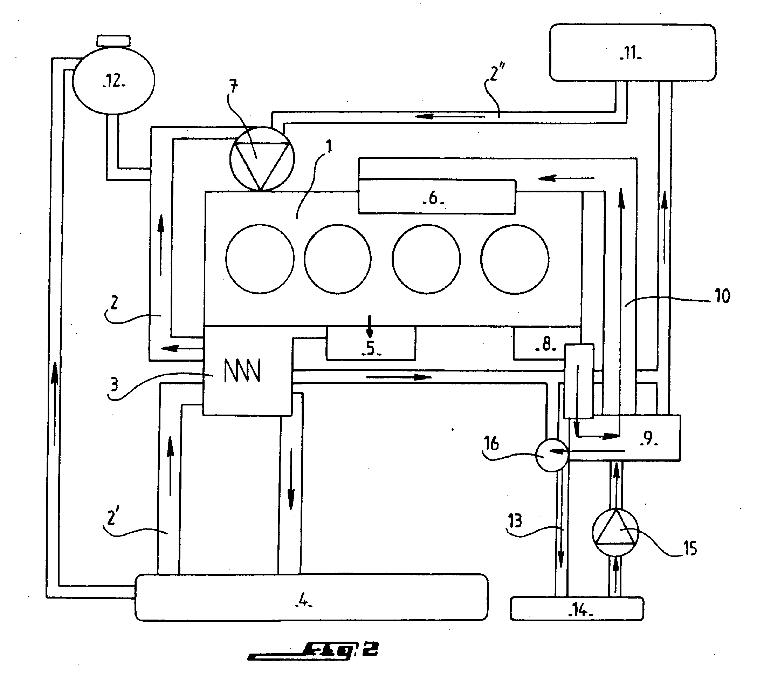

- la figure 2 est une représentation schématique d'un schéma d'utilisation d'un refroidisseur d'air de suralimentation dans le cas de figure où le moteur est chaud et où le refroidissement de l'air de suralimentation est effectué par le liquide de refroidissement basse température, conformément à l'invention,

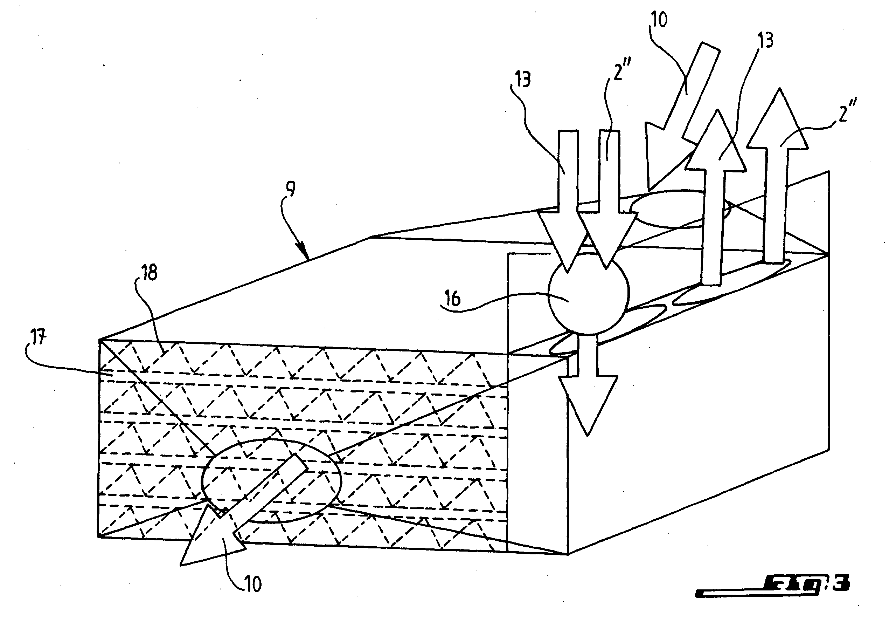

- la figure 3 est une représentation schématique d'un refroidisseur d'air de suralimentation avec une vanne intégrée à ce refroidisseur d'air de suralimentation, conformément à l'invention.

Aux figures 1 et 2, un moteur thermique est référencé 1. Le système de refroidissement du moteur 1 comprend une boucle principale 2 de liquide de refroidissement avec un refroidisseur d'huile 5 et une boîte 3 de sortie de liquide de refroidissement. Une pompe 7 sert à la circulation du liquide de refroidissement dans cette boucle 2. Un circuit 2' de refroidissement du liquide de refroidissement lui est associé en dérivation de la boîte 3 de sortie et comprend un radiateur 4, généralement disposé en façade. Le liquide de refroidissement passe dans ce circuit 2' par la boîte 3 de sortie de liquide équipée d'un thermostat de sorte que le liquide de refroidissement n'est refroidi que quand il a atteint une température suffisamment élevée. Ce circuit 2' est, en outre, relié à la boucle 2 par l'intermédiaire d'une canalisation auxiliaire passant du radiateur 4 vers la boucle principale 2 par l'intermédiaire d'une boîte de dégazage 12. ce système comprend aussi une boucle auxiliaire 2" sur laquelle est disposée l'aérotherme 11, assurant le chauffage du véhicule et qui alimente aussi en liquide de refroidissement le refroidisseur d'air de suralimentation 9.

Le moteur 1 présente aussi un turbocompresseur 8 associé au refroidisseur d'air de suralimentation 9. Le turbocompresseur 8 entraîné par les gaz d'échappement du moteur produit de l'air sous pression, encore appelé air de suralimentation, passant dans le conduit d'air 10 et envoyé au plénum 6 d'admission du moteur. Comme l'air de suralimentation se trouve à une température élevée, cet air est refroidi par ce refroidisseur d'air de suralimentation 9, encore appelé RAS.

Le RAS 9 est un échangeur de chaleur gaz/liquide et est donc, d'une part, refroidi par le liquide de refroidissement du moteur 1 passant par la boucle auxiliaire 2'' de refroidissement. Cette boucle forme le système de refroidissement du RAS 9 avec liquide haute température, car le liquide de refroidissement du moteur est, sauf en période de montée thermique du moteur 1 au début de la marche de celui-ci, relativement chaud. Une boucle basse température 13 forme le système de refroidissement du RAS 9 avec liquide basse température. Cette boucle basse température 13 comprend une pompe 15 pour la circulation du liquide basse température dans celle-ci et un radiateur 14 indépendant pour le refroidissement de ce liquide basse température.

Selon l'invention, cette boucle basse température 13 est indépendante de la boucle auxiliaire 2" de liquide haute température, c'est-à-dire par exemple qu'aucun piquage n'a été réalisé sur cette boucle auxiliaire 2" pour alimenter la boucle basse température 13. Ainsi, le liquide circulant dans cette boucle 13 présente une température basse, car non déjà réchauffé par le moteur 1 et permet un refroidissement efficace du RAS 9.

Selon l'invention, une vanne 16 intégrée au RAS 9 est prévue pour alimenter celui-ci soit en liquide haute température en provenance de la boucle auxiliaire 2'', soit en liquide basse température en provenance de la boucle basse température 13. Ainsi, il n'y a pas mélange des deux liquides et le système de refroidissement obtenu est plus compact.

La figure 1 illustre le cas de figure où le moteur thermique 1 est en montée de température avec le thermostat de la boucle 2' fermé et pas de refroidissement du liquide par le radiateur 4.

Dans ce cas, le procédé de régulation de la température d'éléments du moteur et de composants amenés au moteur prévoit de réchauffer le liquide de refroidissement et l'huile du moteur pour un meilleur fonctionnement de celui-ci en utilisant la chaleur de l'air de suralimentation.

Une montée efficace en température du liquide de refroidissement du moteur est importante. En effet, celui-ci circule dans le carter moteur ainsi que la culasse et échange des calories avec l'huile. Plus une huile est chaude, plus elle est fluide, plus les frottements pistons chemises et donc les PMF se réduisent. Au final, en diminuant ces pertes par frottement, on a besoin de moins de carburant pour produire le même couple à la roue et on consomme donc moins. Des réductions d'émissions polluantes peuvent aussi être obtenues.

La vanne 16 est donc disposée de telle manière que seul le liquide de refroidissement du moteur pénètre dans le RAS 9.

Le liquide de refroidissement du moteur 1 monte ainsi en température rapidement et le thermostat de la boîte de sortie 3 de liquide se déclenche afin que ce liquide soit refroidi par le radiateur 4 dans le circuit 2', sans qu'il y ait nécessité de changement de disposition de la vanne 16. Dans cette zone transitoire de fonctionnement du moteur thermique 1, où le liquide de refroidissement est assez chaud pour le bon fonctionnement du moteur 1 mais pas trop chaud, celui-ci peut servir au refroidissement de l'air de suralimentation au moteur. La boucle auxiliaire haute température 2'' sert donc de circuit de refroidissement au RAS 9 et la vanne 16 est ouverte pour ne laisser passer que ce liquide dans le RAS 9.

La figure 2 illustre le cas, où le moteur thermique 1 devient trop chaud pour refroidir efficacement l'air d'admission bien que le thermostat de la boîte 3 dans la boucle 2' soit ouvert et qu'un refroidissement du liquide de cette boucle 2' soit effectué par le radiateur 4.

Dans ce cas, le procédé de régulation de la température d'éléments du moteur et de composants amenés au moteur prévoit de refroidir l'air de suralimentation plus efficacement en utilisant la boucle basse température 13 pour un meilleur fonctionnement du moteur 1.

Ainsi l'air de suralimentation amené au plénum 6 de l'entrée d'admission du moteur est refroidi plus efficacement avec comme avantages une diminution de la température de combustion et de la formation des oxydes d'azote.

Pour ce faire, la vanne intégrée 16 est ouverte pour ne laisser passer que le fluide du circuit basse température 13.

Sur ces figures 1 et 2, le RAS 9 a été montré disposé sur la boucle 2" de l'aérotherme 11 du véhicule. Il est cependant évident que ceci n'a pas un caractère limitatif et que ce RAS 9 peut se trouver sur une autre dérivation du système de refroidissement du moteur 1 par un piquage quelconque sur le circuit du liquide de refroidissement moteur. C'est le besoin fonctionnel en débit de liquide de refroidissement dans le RAS 9 qui guidera son implantation.

Le liquide de refroidissement moteur peut être de l'eau avec des ou sans adjuvant, par exemple contre la corrosion.

La figure 3 montre un refroidisseur d'air de suralimentation 9 avec ses parties constitutives. Ce RAS 9 comprend deux entrées respectives 13 et 2" de liquide de refroidissement haute température et de liquide de refroidissement basse température auxquelles correspondent deux sorties respectives 13 et 2''. A l'intérieur du RAS 9 se trouve une vanne intégrée 16 pour la sélection du fluide de refroidissement choisi.

La vanne intégrée 16 peut être une vanne électrique, thermostatique ou pneumatique. Elle peut être commandée par une unité de commande fonctionnant avec un capteur mesurant la température de l'air de suralimentation au moteur, ces deux éléments étant non montrés aux figures. Le fait d'utiliser une vanne intégrée 16 pour le RAS 9 représente un gain de place dans le système de refroidissement et permet de ne pas mélanger les deux liquides de refroidissement avant leur entrée dans le RAS 9.

Les flèches 10 sur le devant et l'arrière du RAS 9 montrent le passage de l'air de suralimentation dans ce RAS 9 par la tubulure d'entrée et la tubulure de sortie respectivement sur la figure à l'arrière et à l'entrée du RAS 9.

Le faisceau d'échangeur de chaleur du RAS 9 est formé d'un empilement de tubes 17 et d'intercalaires ondulés 18. Les tubes 17 délimitent les lames de circulation du fluide de refroidissement traversant le faisceau, ces lames alternant avec des canaux de circulation d'air de suralimentation, ces derniers étant formés entre les ondulations des intercalaires 18. Ces intercalaires 18 peuvent être fixés par brasage sur les tubes 17.

Pour le remplissage en fabrication du RAS 9, en cas de vanne 16 électrique, celle-ci est mise en position neutre pour permettre le remplissage des deux conduits de liquide de refroidissement au vide à travers le RAS 9. Quand la vanne 16 n'est pas électrique, il sera alors procédé au remplissage séparé des deux conduits.

Cela vaut aussi pour le remplissage en service après-vente.

Les avantages de la présente invention sont nombreux. On pourra citer, entre autres :
- un potentiel de réduction de la consommation de carburants par la montée en température rapide du moteur,
- dans des moments spécifiques, comme la régénération du filtre à particules où une température élevée est nécessaire, le liquide haute température peut permettre de ne pas refroidir l'air et, par conséquent, un dispositif de dérivation du liquide de refroidissement pour le refroidisseur d'air de suralimentation n'est pas nécessaire,
- un potentiel de réduction des émissions d'acide carbonique et de monoxyde de carbone pour une montée plus rapide du moteur dans sa phase de montée en température,
- pour le refroidissement à liquide basse température, un potentiel de réduction des oxydes d'azote,
- enfin quand le refroidisseur d'air de suralimentation est sur la boucle de l'aérotherme, un gain en confort thermique de l'habitacle par un chauffage en climat froid.

## Revendications

1. Procédé de régulation de la température d'éléments d'un moteur thermique (1) à turbocompresseur et/ou de composants amenés à ce moteur thermique (1), ce moteur (1) étant alimenté en gaz d'admission sortant d'un turbocompresseur (8) et passant dans un refroidisseur d'air de suralimentation (9) avant son entrée dans le plénum (6) d'admission du moteur (1), ce refroidisseur (9) comprenant un échangeur de chaleur gaz/liquide couplé avec le système de liquide de refroidissement du moteur, **caractérisé en ce que**, lors de la phase de montée en température du moteur thermique (1), ce procédé comprend l'étape de chauffage du liquide de refroidissement du moteur par ce refroidisseur d'air de suralimentation (9) afin que ce liquide soit porté, ainsi que l'huile du moteur, plus vite à la température de fonctionnement normal du moteur (1) et **en ce qu'**il comprend, lors de la phase où le moteur thermique (1) est chaud ainsi que son liquide de refroidissement, une étape de refroidissement du refroidisseur d'air de suralimentation (9) par un fluide basse température circulant dans une boucle (13) indépendante du système de liquide de refroidissement du moteur.

2. Procédé de régulation de la température d'éléments d'un moteur thermique (1) à turbocompresseur et/ou de composants amenés à ce moteur thermique (1), selon la revendication 1, **caractérisé en ce qu'**il comprend, lors de la phase où la température du moteur thermique (1) doit être maintenue suffisamment haute, par exemple lors de la régénération du filtre à particules, et dans le cas où la température du fluide de refroidissement du moteur est suffisamment haute, une étape de maintien de l'amenée du fluide de refroidissement du moteur au refroidisseur d'air de suralimentation (9), afin que l'air de suralimentation amené au moteur (1) soit gardé à une température haute.

3. Refroidisseur d'air de suralimentation (9) pour un moteur thermique (1) comprenant un turbocompresseur (8), ce refroidisseur (9) présentant une boucle de refroidissement (2'') avec le fluide de refroidissement du moteur thermique (1) dit boucle de fluide haute température (2'') et une boucle de refroidissement auxiliaire dit boucle de fluide basse température (13), une vanne (16) pouvant alimenter le refroidisseur d'air (9) en fluide haute température pour assurer un chauffage du liquide de refroidissement du moteur par ce refroidisseur d'air de suralimentation (9) afin que ce liquide soit porté, ainsi que l'huile du moteur, plus vite à la température de fonctionnement normal du moteur, ou en fluide basse température, **caractérisé en ce que** la boucle de fluide basse température (13) est indépendante de la boucle de fluide haute température (2'') et que la vanne (16) est intégrée dans le refroidisseur d'air de suralimentation (9).

4. Refroidisseur d'air de suralimentation (9) selon la revendication 3, **caractérisé en ce que** la boucle de fluide basse température (13) comprend sa pompe (15) et son radiateur (14) propres.

5. Refroidisseur d'air de suralimentation (9) selon la revendication 3 ou 4, **caractérisé en ce que** la vanne (16) intégrée est une vanne électrique, pneumatique ou thermostatique.

6. Refroidisseur d'air de suralimentation (9) selon l'une quelconque des revendications 3 à 5, **caractérisé en ce que** le liquide de refroidissement haute température (2'') est principalement de l'eau, le cas échéant avec des adjuvants.

7. Refroidisseur d'air de suralimentation (9) selon la revendication 3 à 6, **caractérisé en ce que** la vanne (16) peut être commandée par une unité de commande comprenant notamment un capteur mesurant la température de l'air de suralimentation au moteur (1), et des capteurs dans les boucles de refroidissement haute (2'') et basse température (13) pour la sélection de la boucle assurant le refroidissement du refroidisseur d'air de suralimentation (9), cette unité de commande pouvant permettre aussi le maintien du refroidissement haute température lors de la phase où la température du moteur thermique (1) doit être maintenue suffisamment haute, par exemple pour la régénération du filtre à particules.

8. Système de refroidissement d'un moteur thermique (1) à turbocompresseur **caractérisé en ce qu'**il comprend sur une de ses boucles un refroidisseur d'air de suralimentation (9) selon l'une quelconque des revendications 3 à 7.

9. Véhicule automobile à moteur thermique (1) à turbocompresseur ou à motorisation hybride **caractérisé en ce qu'**il comprend un refroidisseur d'air de suralimentation (9) selon l'une quelconque des revendications 3 à 7, ou un système de refroidissement d'un moteur thermique selon la revendication 8.

10. Véhicule automobile selon la revendication précédente, **caractérisé en ce que** le refroidisseur d'air de suralimentation (9) est disposé sur une boucle de refroidissement du moteur thermique (1) comprenant aussi l'aérotherme (11) du véhicule.

## Claims

1. Method for regulating the temperature of elements of a heat engine (1) having a turbocharger and/or of components brought to this heat engine (1), this engine (1) being supplied with intake gas leaving a turbocharger (8) and passing through a charge air cooler (9) before its entry in the inlet plenum (6) of the engine (1), this cooler (9) comprising a gas/liquid heat exchanger coupled with the cooling liquid system of the engine, **characterized in that**, at the time of the temperature rise phase of the heat engine (1), this method comprises the stage of heating the cooling liquid of the engine by this charge air cooler (9) so that this liquid, and also the oil of the engine, is brought more quickly to the normal operating temperature of the engine (1) and **in that** it comprises, at the time of the phase in which the heat engine (1) is hot, and also its cooling liquid, a cooling stage of the charge air cooler (9) by a low temperature fluid circulating in a loop (13) which is independent of the cooling liquid system of the engine.

2. Method for regulating the temperature of elements of a heat engine (1) having a turbocharger and/or of components brought to this heat engine (1), according to Claim 1, **characterized in that** it comprises, at the time of the phase in which the temperature of the heat engine (1) must be maintained sufficiently high, for example at the time of the regeneration of the particle filter, and in the case where the temperature of the cooling fluid of the engine is sufficiently high, a stage for maintaining the supply of the cooling fluid of the engine to the charge air cooler (9), so that the charge air supplied to the engine (1) is kept at a high temperature.

3. Charge air cooler (9) for a heat engine (1) comprising a turbocharger (8), this cooler (9) having a cooling loop (2'') with the cooling fluid of the heat engine (1), designated high temperature fluid loop (2'') and an auxiliary cooling loop, designated low temperature fluid loop (13), a valve (16) being able to feed the air cooler (9) with high temperature fluid to ensure a heating of the cooling liquid of the engine by this charge air cooler (9) so that this liquid, and also the oil of the engine, is brought more quickly to the normal operating temperature of the engine, or with low temperature fluid, **characterized in that** the low temperature fluid loop (13) is independent of the high temperature fluid loop (2'') and that the valve (16) is integrated in the charge air cooler (9).

4. Charge air cooler (9) according to Claim 3, **characterized in that** the low temperature fluid loop (13) comprises its own pump (15) and its own radiator (14).

5. Charge air cooler (9) according to Claim 3 or 4, **characterized in that** the integrated valve (16) is an electric, pneumatic or thermostatic valve.

6. Charge air cooler (9) according to any one of Claims 3 to 5, **characterized in that** the high temperature cooling liquid (2'') is principally water, if applicable with adjuvants.

7. Charge air cooler (9) according to Claim 3 to 6, **characterized in that** the valve (16) can be controlled by a control unit comprising in particular a pickup measuring the temperature of the charge air to the engine (1), and pickups in the high temperature (2'') and low temperature (13) cooling loops for the selection of the loop ensuring the cooling of the charge air cooler (9), this control unit also being able to permit the maintaining of the high temperature cooling at the time of the phase in which the temperature of the heat engine (1) must be kept sufficiently high, for example for the regeneration of the particle filter.

8. Cooling system of a heat engine (1) having a turbocharger, **characterized in that** it comprises on one of its loops a charge air cooler (9) according to any one of Claims 3 to 7.

9. Motor vehicle with a heat engine (1) having a turbocharger or a hybrid drive unit, **characterized in that** it comprises a charge air cooler (9) according to any one of Claims 3 to 7, or a cooling system of a heat engine according to Claim 8.

10. Motor vehicle according to the preceding claim, **characterized in that** the charge air cooler (9) is disposed on a cooling loop of the heat engine (1) also comprising the heater unit (11) of the vehicle.

## Patentansprüche

1. Verfahren zum Regeln der Temperatur von Elementen eines Verbrennungsmotors (1) mit Turbolader und/oder Bestandteilen, die zu diesem Verbrennungsmotor (1) gebracht werden, wobei dieser Motor (1) mit Einlassgas versorgt wird, das aus einem Turbolader (8) austritt und durch einen Ladeluftkühler (9) läuft, bevor es in das Einlassplenum (6) des Motors (1) eintritt, wobei dieser Kühler (9) einen Gas-/Flüssigkeits-Wärmeaustauscher aufweist, der mit dem Kühlflüssigkeitssystem des Motors gekoppelt ist, **dadurch gekennzeichnet, dass** das Verfahren bei der Temperaturanstiegsphase des Verbrennungsmotors (1) einen Schritt des Erhitzens der Kühlflüssigkeit des Motors durch diesen Ladeluftkühler (9), damit diese Flüssigkeit sowie das Öl des Motors schneller auf die normale Betriebstemperatur des Motors (1) gebracht werden, aufweist, und dass es bei der Phase, in der der Verbrennungsmotor (1) und seine Kühlflüssigkeit heiß sind, einen Schritt des Abkühlens des Ladeluftkühlers (9) durch ein Niedertemperaturfluid, das in einer Schleife (13) zirkuliert, die von dem Kühlflüssigkeitssystem des Motors unabhängig ist, aufweist.

2. Verfahren zum Regeln der Temperatur von Elementen eines Verbrennungsmotors (1) mit Turbolader und/oder Bestandteilen, die zu diesem Verbrennungsmotor (1) gebracht werden, nach Anspruch 1, **dadurch gekennzeichnet, dass** es bei der Phase, in der die Temperatur des Verbrennungsmotors (1) ausreichend hoch gehalten werden muss, zum Beispiel bei dem Regenerieren des Partikelfilters, und in dem Fall, in dem die Temperatur des Kühlmittels des Motors ausreichend hoch ist, einen Schritt des Aufrechterhaltens der Zufuhr des Kühlmittels des Motors zum Ladeluftkühler (9) aufweist, damit die dem Motor (1) zugeführte Ladeluft auf einer hohen Temperatur gehalten bleibt.

3. Ladeluftkühler (9) für einen Verbrennungsmotor (1), der einen Turbolader (8) aufweist, wobei dieser Kühler (9) eine Kühlschleife (2") mit dem Kühlmittel des Verbrennungsmotors (1) aufweist, die Hochtemperaturfluidschleife (2") genannt wird, und eine Hilfskühlschleife, Niedertemperaturfluidschleife (13) genannt, wobei ein Schieber (16) den Ladeluftkühler (9) mit Hochtemperaturfluid versorgen kann, um ein Erhitzen der Kühlflüssigkeit des Motors durch diesen Ladeluftkühler (9) sicherzustellen, damit diese Flüssigkeit sowie das Motoröl schneller auf die normale Betriebstemperatur des Motors gebracht werden, oder mit Niedertemperaturfluid, **dadurch gekennzeichnet, dass** die Niedertemperaturfluidschleife (13) von der Hochtemperaturfluidschleife (2") unabhängig ist, und dass der Schieber (16) in den Ladeluftkühler (9) eingebaut ist.

4. Ladeluftkühler (9) nach Anspruch 3, **dadurch gekennzeichnet, dass** die Niedertemperaturfluidschleife (13) ihre eigene Pumpe (15) und ihren eigenen Kühler (14) aufweist.

5. Ladeluftkühler (9) nach Anspruch 3 oder 4, **dadurch gekennzeichnet, dass** der eingebaute Schieber (16) ein elektrischer, Druckluft- oder Schieber mit Thermostat ist.

6. Ladeluftkühler (9) nach einem der Ansprüche 3 bis 5, **dadurch gekennzeichnet, dass** die Hochtemperaturkühlflüssigkeit (2") im Wesentlichen Wasser ist, gegebenenfalls mit Zusatzmitteln.

7. Ladeluftkühler (9) nach Anspruch 3 bis 6, **dadurch gekennzeichnet, dass** der Schieber (16) von einer Steuereinheit gesteuert werden kann, die insbesondere einen Sensor aufweist, der die Temperatur der Ladeluft am Motor (1) misst, und Sensoren in den Hochtemperatur- (2") und Niedertemperaturkühlschleifen (13) zum Auswählen der Schleife, die das Kühlen des Ladeluftkühlers (9) sicherstellt, wobei diese Steuereinheit auch das Aufrechterhalten der Hochtemperaturkühlung in der Phase erlaubt, in der die Temperatur des Verbrennungsmotors (1) ausreichend hoch gehalten werden muss, zum Beispiel für das Regenerieren des Partikelfilters.

8. Kühlsystem eines Verbrennungsmotors (1) mit Turbolader, **dadurch gekennzeichnet, dass** es auf einer seiner Schleifen einen Ladeluftkühler (9) nach einem der Ansprüche 3 bis 7 aufweist.

9. Kraftfahrzeug mit Verbrennungsmotor (1) mit Turbolader oder mit Hybridantrieb, **dadurch gekennzeichnet, dass** es einen Ladeluftkühler (9) nach einem der Ansprüche 3 bis 7 oder ein Kühlsystem eines Verbrennungsmotors nach Anspruch 8 aufweist.

10. Kraftfahrzeug nach dem vorhergehenden Anspruch, **dadurch gekennzeichnet, dass** der Ladeluftkühler (9) auf einer Kühlschleife des Verbrennungsmotors (1) angeordnet ist, die auch den Lufterhitzer (11) des Fahrzeugs enthält.
